# EUROPÄISCHE PATENTSCHRIFT

(11) **EP 3 510 835 B1**
(45) Veröffentlichungstag und Bekanntmachung des Hinweises auf die Patenterteilung: **03.01.2024**
(21) Anmeldenummer: 17768399.2
(22) Anmeldetag: 06.09.2017
(51) Int. Cl.: H05B 3/48, H05B 3/14, F16K 49/00, F02M 25/08, F02M 26/73, F02M 31/12

(54) **RINGFÖRMIGES HEIZELEMENT**
ANNULAR HEATING ELEMENT
ÉLÉMENT CHAUFFANT ANNULAIRE

(30) Priorität: 08.09.2016 DE 102016010772; 11.07.2017 DE 102017006522
(43) Veröffentlichungstag der Anmeldung: 17.07.2019
(73) Patentinhaber: Eichenauer Heizelemente GmbH & Co. KG, 76870 Kandel (DE)
(72) Erfinder: KEXEL, Oleg, 76275 Ettlingen (DE); STARCK, Roland, 76756 Bellheim (DE)
(74) Vertreter: Twelmeier Mommer & Partner
(86) Internationale Anmeldenummer: PCT/EP2017/072368
(87) Internationale Veröffentlichungsnummer: WO 2018/046548

(56) Entgegenhaltungen:
- DE-A1-102011 011 692
- US-A- 4 327 697
- US-A- 4 390 000
- US-A- 4 407 254
- US-A- 4 489 232

## Beschreibung

Die Erfindung geht aus von einem ringförmigen Heizelement mit den im Oberbegriff des Anspruchs 1 angegebenen Merkmalen, wie es aus US 4 390 000 bekannt ist. Ein ähnliches Heizelement ist aus US 4 489 232 bekannt.

Ein ringförmiges Heizelement ist auch aus DE 10 2014 109 273 A1 bekannt. Derartige Heizelemente werden beispielsweise zum Beheizen eines Regelventils, insbesondere eines Abgasrückführventils, einer Aktivkohlefiltereinheit, einer Düse, eines Injektors, eines Anschlussflansches einer Fluidleitung oder einer Kameralinse benötigt; kurz gesagt für Anwendungen, bei denen ein Objekt rundherum entlang einer Ringfläche beheizt werden soll.

Einzelheiten werden hierzu im Folgenden beispielhaft im Zusammenhang mit einem Regelventil erläutert. Regenventile bestehen im Wesentlichen aus einem Gehäuse mit einer Einlass- und Auslassöffnung. Dazwischen ist in einem Führungskanal eine beweglicher Ventilstange angeordnet, an deren einem Ende ein Ventilteller angebracht ist, der mit einem Ventilsitz zusammenwirkt, um den Durchgang zwischen Einlass- und Auslassöffnung freizugeben oder zu verschließen. Bei tiefen Temperaturen kann nun sowohl der Ventilteller am Ventilsitz, aber auch die Ventilstange im Bereich des Ringspaltes am Führungskanal durch Gefrieren des Förderfluids oder Kondensats festfrieren und das Ventil dadurch in seiner Funktion beeinträchtigen. Aus diesem Grunde sind sowohl Ventilsitzbeheizungen als auch Beheizungen, die den Ringspalt zwischen Ventilstange und Führungskanal beheizen, bekannt. So ist z.B. aus der US6668854B2 eine Beheizung des Ringspaltes und des Ventiltellers bekannt, bei der die Beheizung in Form einer Heizpatrone erfolgt, die in einen Schacht des Gehäuses längsseits des Führungskanals eingebracht ist. Nachteilig dabei ist, dass der Führungskanal dabei nicht gleichmäßig von allen Seiten beheizt wird. Weiterhin nachteilig wird für den Schacht ein relativ dickes, massives Gehäuse benötigt, das den Schacht ausbilden kann.

Ähnliche Probleme stellen sich bei der Beheizung einer Aktivkohlefiltereinheit, wie sie beispielsweise zum Absorbieren von Kraftstoffgasen eingesetzt wird. Dabei kann durch die integrierte Heizung die Absorptions- und Abscheidungseffizienz durch die Erhöhung der Temperatur von Aktivkohle im Filter verbessert werden. Im Allgemeinen sammelt und speichert die Filtereinheit die Kraftstoffgase, insbesondere Kohlenwasserstoffe, die beim Stehen, Fahren und Betanken erzeugt werden und leitet sie mittels Spülluft, die durch den Motoransaugdruck erzeugt wird, an die Brennkammer weiter, wenn der Motor läuft. Damit benötigen schadstoffarme Fahrzeuge, vor allem auch Hybridfahrzeuge und Fahrzeuge mit einer Start-Stopp-Automatik sehr leistungsfähige Filter, da sie immer weniger Zeit zur Regeneration bei laufendem Motor haben.

Eine Aktivkohlefiltereinheit weist in der Regel drei Fluidanschlüsse für Umgebungsluft, Kraftstofftank und Motoreinheit auf. Je nach Betriebszustand werden die Anschlüsse als Einlässe oder Auslässe betrieben. Zur Erhöhung der Leistungsfähigkeit und Regenerationsgeschwindigkeit ist es bekannt, PTC-Heizwiderstände in die Aktivkohlefiltereinheit zu integrieren. Dazu ist beispielweise in der DE 10 2009 020 703 A1 ein Heizwiderstand vom luftseitigen Anschluss gesehen vor einem Absorptionskörper angeordnet, das im Regenerationsbetrieb die Temperatur der Ansaugluft durch den Absorptionskörper erhöht und dadurch der Absorptionskörper effektiver regeneriert werden kann. Ein weiterer Heizwiderstand ist zudem mitten in der Aktivkohleschüttung eingebettet, um auch bei dieser die Temperatur und dadurch die Regenerationgeschwindigkeit zu erhöhen. Bei den verwendeten Heizwiderständen handelt es sich um PTC-Heizwiderstände, die in Kanälen von Strangpressprofilen eingebracht sind. Die Außenwände der Kanäle und der damit verbundenen Wärmeabstrahlrippen stehen wiederum mit dem Aktivkohlegranulat bzw. mit einem Fluidstrom in wärmeleitender Verbindung, wobei die Strangpressrichtung in Strömungsrichtung orientiert ist, um eine möglichst effektive Wärmeübertragung zu gewährleisten. Nachteilig wird dafür ein erheblicher Bauraum und eine eigens dafür konstruierte Aktivkohlefiltereinheit benötigt. Außerdem sind die Kraftstoffgase sehr aggressiv. Die im Heizelement vorhandenen PTC-Steine sind in dieser Ausführung aber schwer gegen die Gase abzudichten, da ein Vergießen der Kanalöffnungen die PTC-Steine nicht zuverlässig gegen die aggressiven Gase abdichten kann. Im Absorptionsmodus kann diese Anordnung auch nicht ganz verhindern, dass kleinere Mengen der Gase ins Freie gelangen, was die strengen Abgasnormen z.B. in USA verbieten.

Vor diesem Hintergrund besteht die Aufgabe der Erfindung deshalb darin, ein Heizelement zu schaffen, das ein Objekt rundherum entlang einer Ringfläche beheizen kann und dabei gleichzeitig so kompakt ausgeführt ist, dass es relativ wenig Bauraum benötigt und einen einfachen Einbau ermöglicht. Zudem sollen die elektrischen Teile des Heizelements vor Umgebungseinflüssen geschützt werden können.

Diese Aufgabe wird durch ein Heizelement mit den im Anspruch 1 angegebenen Merkmalen gelöst. Vorteilhafte Weiterbildungen der Erfindung sind Gegenstand von Unteransprüchen.

Ein erfindungsgemäßes Heizelement hat ein Gehäuse, das ein ringförmiges Metallteil aufweist, das eine radial innere Wand, eine radial äußere Wand und eine erste stirnseitige Wand bildet. Sowohl an die radial innere Wand als auch an die radial äußere Wand grenzt jeweils ein Abschnitt an, der zumindest einen Teil einer zweiten stirnseitigen Wand, die der ersten stirnseitigen Wand gegenüberliegt, bildet. Das Metallteil ist bevorzugt aus Blech geformt, kann aber beispielsweise auch ein Druckguss- oder Fließpressteil sein. Bevorzugt ist das Blech gut wärmeleitend und daher aus Aluminium, Kupfer oder eine Legierung auf Basis dieser Metalle hergestellt.

Ein solches Gehäuse kann mit vorteilhaft geringem Aufwand hergestellt werden, indem durch Tiefziehen, auch mehrstufig, aus einer Blechscheibe zunächst ein im Querschnitt U-förmiges Gehäuseteil hergestellt wird, das eine radial innere Wand, eine radial äußere Wand und eine erste stirnseitige Wand bildet.

In das vorgeformte Gehäuseteil werden erfindungsgemäß dann Komponenten des Heizelements, insbesondere ein ringförmiger PTC-Heizwiderstand oder ringförmig angeordnete PTC-Widerstände sowie ein oder mehrere Kontaktelemente, beispielsweise zwei ringförmige Kontaktbleche, eingelegt. Danach wird erfindungsgemäß das Gehäuse geschlossen, indem obere Abschnitte von der radial inneren und der radial äußeren Seitenwand umgeklappt werden, so dass diese zumindest einen Teil der zweiten stirnseitigen Wand bilden, die der ersten stirnseitigen Wand gegenüber liegt. Ein solches Gehäuse hat zudem den Vorteil, dass es kompakt ist, eine gute Wärmeankopplung des PTC-Heizwiderstands ermöglicht und die darin angeordneten Komponenten des Heizelements vor Umgebungseinflüssen schützt. Ein weiterer Vorteil besteht darin, dass das Gehäuse mit geringem Aufwand abgedichtet werden kann.

Die an die radial innere und die radial äußere Seitenwand anschließenden Abschnitte können auf der zweiten Stirnseite überlappen oder angrenzen und so die zweite Stirnseite vollständig ausbilden. Bevorzugt überlappen diese beiden Abschnitt jedoch nicht. Eine einfache Fertigung lässt sich realisieren, indem das Gehäuse ein zweites Gehäuseteil aufweist, das zusammen mit den beiden Abschnitten des ringförmigen Metallteils die zweite stirnseitige Wand bildet. Beispielsweise können der an die radial innere Seitenwand angrenzende Abschnitt und der an die radial äußere Seitenwand angrenzende Abschnitt jeweils einen Teil dieses zweiten Gehäuseteils bedecken und einen Bereich des zweiten Gehäuseteils zwischen dem an die radial innere Seitenwand und dem an die radial äußere Seitenwand angrenzenden Abschnitt unbedeckt lassen. Das zweite Gehäuseteil kann dabei vorteilhaft auch als Widerlager beim Umklappen der an die Seitenwände angrenzenden Abschnitte dienen und einen Druck in axialer Richtung auf die darunter angeordneten Komponenten des Heizelements weitergeben, so dass eine gute thermische Ankopplung des PTC-Heizwiderstands an das ringförmige Gehäuse erreicht wird.

Das zweite Gehäuseteil ist bevorzugt aus Metall und kann beispielsweise eine Ringscheibe aus Blech sein, insbesondere aus Edelstahl. Möglich sind auch Kunststoff oder Keramik.

Eine vorteilhafte Weiterbildung der Erfindung sieht vor, dass zur Abdichtung des Gehäuses unter der zweiten stirnseitigen Wand ein Dichtring angeordnet ist, beispielsweise ein elastomerer Dichtring. Auf diese Weise kann verhindert werden, dass Fluide durch einen Spalt zwischen den von den Seitenwänden ausgehenden Blechabschnitten elektrische Komponenten im Inneren des Gehäuses beinträchtigen. Dies ist beispielsweise bei Einsatz des Heizelements zur Beheizung eines Aktivkohlefilters ein wichtiger Vorteil, da auf diese Weise das Heizelement gegen die Kraftstoffgase ausreichend abgedichtet werden kann.

In einem erfindungsgemäßen Heizelement kann der PTC-Heizwiderstand auf einer Seite von einem oder mehreren Kontaktelementen und auf der gegenüberliegenden Seite von dem Gehäuse kontaktiert werden. Bevorzugt ist aber, dass der PTC-Heizwiderstand auf gegenüberliegenden Seiten jeweils von einem Kontaktelement elektrisch kontaktiert wird.

Eine weitere vorteilhafte Weiterbildung der Erfindung sieht vor, dass von einem bevorzugt ringförmigen Kontaktelement oder von den Kontaktelementen jeweils ein streifenförmiger Anschlussabschnitt ausgeht. Dieser Anschlussabschnitt kann beispielsweise in einem Kontaktstift eines Steckverbinders enden oder an einen Kontaktstift eines Steckverbinders angeschlossen sein. Der Anschlussabschnitt oder die Anschlussabschnitte sind bevorzugt aus der radial äußeren Seitenwand herausgeführt; eine Aussparung dafür kann aber beispielsweise auch in einer der Stirnseiten vorgesehen sein. Um eine Aussparung in der radial äußeren Seitenwand abzudichten, kann zwischen der radial äußeren Seitenwand und dem bzw. den Anschlussabschnitten ein Dichtring, insbesondere ein Dichtring aus einem elastomeren Material angeordnet sein.

Der Anschlussabschnitt oder die Anschlussabschnitte können mit Kunststoff umspritzt sein. Diese Kunststoffumspritzung kann ein Steckergehäuse und/oder einen Rahmen bilden, der den PTC-Heizwiderstand sowie das Kontaktelement oder die Kontaktelemente hält.

In einer vorteilhaften Weiterbildung der Erfindung ist mindestens ein Kontaktelement in einen Kunststoffrahmen eingespritzt. Dabei ist der Kunststoffrahmen bevorzugt so ausgeführt, dass er im ringförmigen Abschnitt des Kontaktelementes eine Oberseite des Kontaktelementes bedeckt und davon ausgehend zwei zylindrische Seitenwände aufweist, zwischen denen der ringförmige PTC-Heizwiderstand in Kontakt mit der Unterseite des Kontaktelementes eingelegt ist. Der streifenförmige Abschnitt ist bis auf den Anschlussbereich vollständig vom Kunststoffrahmen umspritzt.

In einer äußerst bevorzugten Ausgestaltung ist der streifenförmige Abschnitt eines zweiten Kontaktelementes ebenfalls in den Kunststoffrahmen eingespritzt. Der ringförmige Abschnitt dagegen liegt frei an der Unterseite des PTC-Heizwiderstands an.

Der PTC-Heizwiderstand ist bevorzugt aus einem keramischen Material, insbesondere auf Basis von Bariumtitanat, hergestellt. Vorzugsweise ist der PTC-Heizwiderstand ringförmig oder setzt sich aus mehreren ringförmig angeordneten Einzelkomponenten zusammen. Weiterhin bevorzugt ist dieser von dem PTC-Heizwiderstand gebildete Ring ein Kreisring, der so dimensioniert ist, dass die Höhe h des Rings geringer ist als seine Ringbreite b als Differenz zwischen äußerem und innerem Radius. Dies ermöglicht eine platzsparende Ausführung des gesamten Heizelements.

Ein erfindungsgemäßes Heizelement kann, beispielsweise zum Beheizen eines Aktivkohlefilters, mit einem Wärmeübertrager versehen werden, beispielsweise in Form von Ringen, Rippen, Lamellen, Stegen oder Kombinationen davon, die an dem Gehäuse angebracht sind oder von ihm ausgehen. Insbesondere kann auch das Gehäuse selbst als Wärmeübertrager dienen. Ein erfindungsgemäßes Heizelement zusammen mit einem Wärmeübertrager wird im Folgenden als Heizeinrichtung bezeichnet. Sie kann beispielsweise Teil einer Aktivkohlefiltereinheit sein, die einen Absorptionskörper und eine räumlich daran anschließende Kammer mit einer Kammerwand für eine Aktivkohleschüttung aufweist.

Durch eine Heizeinrichtung in einer Aktivkohlefiltereinheit soll in der Regel die Abgasmenge, die im Absorptionsbetrieb ins Freie gelangt, weiter reduziert werden. Zudem soll die Leistungsfähigkeit und Regenerationsgeschwindigkeit der Aktivkohlefiltereinheit durch die Heizeinrichtung erhöht werden und für diese möglichst wenig eigener Bauraum benötigt werden.

Mit der Anordnung einer erfindungsgemäßen Heizeinrichtung im vom luftseitigen Anschluss gesehenen Übergangsbereich vom Absorptionskörper zur Aktivkohleschüttung hin lässt sich die Temperatur der Aktivkohle in diesem Bereich gezielt lokal erhöhen, um in den kurzen Regenerationsphasen komplett entladen zu werden und dann in der Absorptionsphase wieder maximal aufnahmefähig zu sein. Durch die gezielte Beheizung an dieser Stelle kann daher ein Gasaustritt in die Umwelt (sogenannter Schlupf) sicher verhindert werden. Vorteilhaft kann dies mit der erfindungsgemäßen Heizeinrichtung und Aktivkohlefiltereinheit erreicht werden, ohne dass Veränderungen der äußeren Abmessungen des Filtersystems und insbesondere der Gestaltung des Kraftstoffbehälters erforderlich sind. Aber selbst der innere Aufbau der Filtereinheit muss durch die Integration einer erfindungsgemäßen Heizung kaum verändert werden.

Bevorzugt weist dabei das Heizelement ein dichtes Gehäuse wie oben beschrieben auf, das einen PTC-Heizwiderstand, beispielsweise einen Ring-PTC oder mehrere zu einem Ring angeordnete PTC-Elemente, im Inneren gegen die aggressiven Kraftstoffgase ausreichend abdichtet. Äußerst bevorzugt ist das Gehäuse ein bis auf den Bereich zum Herausführen der elektrischen Anschlüsse geschlossenes mehrteiliges, bevorzugt zweiteiliges, Gehäuse, insbesondere ein gut wärmeleitendes Metallgehäuse. Durch dieses Gehäuse ist das Heizelement vorteilhaft als vorgefertigte, kompakte Einheit handhabbar.

In einer vorteilhaften Weiterbildung sind die Gehäuseteile unter Druckbeaufschlagung in Richtung der Stirnseiten des PTC-Heizwiderstands zusammengefügt. Durch die Druckbeaufschlagung ist ein guter Wärmeübergang zwischen dem PTC-Heizwiderstand und dem Gehäuse gewährleistet. Äußerst bevorzugt ist dabei das Gehäuse zweiteilig mit einem im Schnitt U-förmigen Gehäuseunterteil und einem flachen Gehäusedeckel, der auch als zweites Gehäuseteil bezeichnet wird, ausgeführt, wobei die beiden Gehäuseteile durch Umbiegen, insbesondere Einrollen, der oberen Enden des Gehäuseunterteiles über dem Gehäusedeckel verbunden sind.

Wie bereits erwähnt, wird der PTC-Heizwiderstand durch mindestens ein Kontaktelement, das bevorzugt mit einem ringförmigen und einem streifenförmigen Abschnitt versehen ist, der vorstehend als Anschlussstreifen bezeichnet wird, an einer Stirnseite elektrisch kontaktiert. Äußerst bevorzugt weisen beide Stirnseiten ein Kontaktelement mit einem ringförmigen und einem streifenförmigen Abschnitt auf.

In einer bevorzugten Weiterbildung ist der PTC-Heizwiderstand durch jeweils ein Dichtelement, beispielsweise einen elastomeren Dichtring, umlaufend am Außenumfang und auf der Oberseite des Kunststoffrahmens im Gehäuse nach außen abgedichtet angeordnet. Dadurch ist es ermöglicht, dass der PTC-Heizwiderstand gegen aggressive Einflüsse geschützt ist, was wesentlich zur Verlängerung der Lebensdauer und zur Verhinderung von vorzeitigen Ausfällen beiträgt.

Bei einem erfindungsgemäßen Heizelement kann der Heizwiderstand wärmeleitend mit einem Wärmeübertrager verbunden sein. Bevorzugt ist dabei das Gehäuse des Heizelements stoffschlüssig mit dem Wärmeübertrager verbunden, insbesondere sind Gehäuse und Wärmeübertrager einstückig ausgeführt.

Bei Verwendung in einer Aktivkohlefiltereinheit lässt sich durch die damit erreichte vergrößerte Wärmeübertragungsfläche die Temperatur der Aktivkohle in der Regenerationsphase wirksam erhöhen und damit die Effizienz der Aktivkohlefiltereinheit verbessern.

Bei einer bevorzugten Ausgestaltung weist der Wärmeübertrager eine radial größere Ausdehnung auf als das Heizelement. Der Wärmeübertrager kann im Wesentlichen gitterartig ausgeführt und dabei mit Durchbrüchen versehen sein, die ein Durchströmen in axialer Richtung erlauben. Äußerst bevorzugt weist der Wärmeübertrager sowohl im radial kleineren Bereich als auch im radial größeren Bereich des Heizelements Durchbrüche auf. Dadurch ist es einem Fluidstrom ermöglicht, sowohl innen als auch außen am Gehäuse in radialer Richtung vorbei zu strömen und sich dabei zu erwärmen.

In einer erfindungsgemäßen Weiterbildung weist der Wärmeübertrager zumindest einen äußeren und einen inneren Ring mit Verbindungsstegen dazwischen auf, wobei der innere Ring wärmeleitend, insbesondere stoffschlüssig mit dem Gehäuse verbunden ist.

In einer vorteilhaften Ausbildung weist der Wärmeübertrager weiterhin einzelne axial ausgerichtete Stifte oder Klemmen auf, mit deren Hilfe das Gehäuse am Wärmeübertrager befestigt wird. Die Befestigung erfolgt dabei bevorzugt formschlüssig, beispielsweise durch Verstemmen oder Klemmen.

Aktivkohlefiltereinheiten sind meist mehrstufig ausgebildet, wobei ein monolithischer, zum Durchströmen bestimmter zylindrischer Absorptionskörper einer Kammer mit einer Aktivkohleschüttung strömungsmäßig je nach Betriebszustand vor- oder nachgeschaltet ist. Ein Übergangsbereich passt den Durchmesser der größeren Kammer mit Aktivkohleschüttung dem Durchmesser des zylindrischen Absorptionskörpers an.

Bei einer Aktivkohlefiltereinheit mit einer erfindungsgemäßen Heizeinrichtung ist das Heizelement bevorzugt in diesem Übergangsbereich angeordnet. Äußerst bevorzugt ist das Heizelement dabei in geringem Abstand vom Lufteinlass entfernten Ende des Absorptionskörpers angeordnet, insbesondere ist das Heizelement im Abstand von 1mm-5mm angeordnet. Vorteilhaft können dabei der zylindrische Absorptionskörper und der Ring, der durch den ringförmigen PTC-Heizwiderstand oder die ringförmig angeordneten PTC-Heizwiderstände definiert ist, die gleiche Mittelachse haben. Bevorzugt haben der zylindrische Absorptionskörper und das ringförmige Gehäuse die gleiche Mittelachse.

Durch diese Anordnung ist bewirkt, dass der gesamte Gasstrom, der im Regenerationsbetrieb aus dem Absorptionskörper ausströmt, nahe an dem Heizelement und am Wärmeübertrager vorbeiströmen muss und dabei erwärmt wird. Weiterhin ist bevorzugt der Wärmeübertrager auch wärmeleitend mit dem Absorptionskörper direkt oder über ein Verbindungselement wie eine Dichtung wärmeleitend mit dem Absorptionskörper verbunden. Somit wird auch dieser von der Heizeinrichtung erwärmt. Besonders vorteilhaft ist jedoch bei sehr kurzen Regenerationszeiten, dass zumindest die Aktivkohleschüttung im unmittelbaren Bereich des vom luftseitigen Anschluss gesehenen Übergangsbereich vom Absorptionskörper zur Aktivkohleschüttung hin gezielt sowohl durch den erwärmten Luftstrom als auch durch die direkte wärmeleitende Verbindung zum Wärmeübertrager lokal schnell erwärmt wird, wodurch die Bindungsenergie beschleunigt überwunden wird und zumindest in diesem Bereich die Aktivkohle in kürzester Zeit vollständig regeneriert werden kann. Im Absorptionsbetrieb ist dann gerade im Bereich des luftseitigen Anschlusses zum Absorptionskörper hin eine große Aufnahmefähigkeit vorhanden, die jeglichen Schlupf verhindert.

Die Ausgestaltung der Heizeinrichtung mit einem ringförmigen Heizelement und einem Wärmeübertrager, der das radiale Vorbeiströmen eines Gasstromes sowohl innen als auch außen am Heizelement ermöglicht, ist gerade bei Anordnung in der Nähe des zylindrischen Absorptionskörpers äußerst vorteilhaft, da so der gesamte Gasstrom nahe am Heizelement vorbeiströmt, ohne dass der Gasstrom beim Ein- oder Ausströmen in den Absorptionskörper wesentlich behindert wird. Bei Ausbildung einer wärmeleitenden Verbindung zum Absorptionskörper erwärmt sich zusätzlich der gesamte Absorptionskörper, was seine Effektivität wesentlich erhöht.

Eine vorteilhafte Weiterbildung sieht vor, dass der Wärmeübertrager sich über den gesamten Querschnitt der Kammer oder des Übergangbereiches erstreckt. Dadurch durchströmt der gesamte Gasstrom durch den Absorptionskörper auch den Wärmeübertrager und wird dabei relativ homogen aufgeheizt.

Auf der dem Heizelement abgewandten Seite des Wärmeübertragers ist ein Trennvlies angeordnet, das die in die Kammer eingeschüttete Aktivkohle in der Kammer zurückhält und ein Eindringen der Aktivkohleschüttung in den Absorptionskörper verhindert. Die Gitterstruktur des Wärmeübertragers dient dabei gleichzeitig zum Abstützen des Trennvlieses und übernimmt so die Funktion eines ansonsten hierfür extra benötigten Bauteils.

Bevorzugt weist der Wärmeübertrager einen äußeren Ring auf, der an der Kammerwand anliegt. Dieser äußere Ring weist äußerst bevorzugt eine erhebliche axiale Länge auf. Vernachlässigt man die Vliesdicke, steht der Wärmeübertrager auf dieser gesamten Länge direkt mit der Aktivkohle in Verbindung und kann so Wärme auf sie übertragen. Besonders vorteilhaft wird dadurch die Aktivkohle lokal im Bereich des Wärmetauschers auch bei kurzen Regenerationszeiten so stark aufgeheizt, dass sie vollständig regeneriert und im Absorptionsbetrieb die Kraftstoffgase vor Austritt durch den Luftauslass vollständig aufnimmt, sodass sie nicht in die Umwelt gelangen.

Vorteilhaft übernimmt der Wärmeübertrager auch noch weitere Aufgaben, wie z.B. das Fixieren des Absorptionskörpers und oder einer Dichtung, und ersetzt dadurch andere Bauteile, sodass kein zusätzlicher Bauraum für den Wärmeübertrager benötigt wird.

Wenn ein erfindungsgemäßes Heizelement beispielsweise zum Beheizen eines Regelventils eingesetzt wird, kann der PTC-Heizwiderstand bzw. das ihn umgebende ringförmige Gehäuse einen Ringspalt zwischen Führungskanal und Ventilstange umschließen.

Damit das Heizelement beim Beheizen eines Regelventiles seine Wärme gut auf das Ventilgehäuse im Bereich des Ringspaltes zwischen Führungskanal und Ventilstange übertragen kann, ist das Gehäuse des Heizelements in gut wärmeleitendem Kontakt zumindest einer Stirnseite des Heizelements zum Ventilgehäuse, bevorzugt in einer ringförmige Nut oder einem ringförmigen Absatz des Ventilgehäuses, angeordnet. Die Befestigung kann beispielsweise durch Federdruck oder durch Verkleben erfolgen.

Das Heizelement gibt dabei überwiegend über zumindest eine Stirnseite seine Wärme an das Ventilgehäuse ab. Ein radialer Wärmefluss von dem Heizelement in Richtung Ringspalt findet dabei kaum statt. Überraschend hat sich aber gezeigt, dass durch die kompakte, wenig Bauraum beanspruchende Ausführung des erfindungsgemäßen Heizelements trotzdem ein schnelleres Freischmelzen des Ringspaltes ermöglicht wird als bei Ausführungen mit einem direkten, radialen Wärmefluss.

Weitere Einzelheiten und Vorteile der Erfindung werden an Ausführungsbeispielen unter Bezugnahme auf die Beigefügten Zeichnungen erläutert. Gleiche und einander entsprechende Komponenten sind darin mit übereinstimmenden Bezugszeichen bezeichnet. Es zeigen:
- Fig. 1: ein Ausführungsbeispiel eines erfindungsgemäßen Heizelements;
- Fig. 2: eine Schnittansicht zu Fig. 1;
- Fig. 3: die Anordnung eines weiteren Ausführungsbeispiels eines erfindungsgemäßen Heizelements in einem Auszug eines Aktivkohlefiltersystems, der einen Absorptionskörper und eine Kammer für eine Aktivkohleschüttung darstellt;
- Fig. 4: einen Schnitt durch das Heizelement von Fig. 3;
- Fig. 5: den Kunststoffrahmen des Heizelements von Fig. 3 mit dem oberen Kontaktelement;
- Fig. 6: einen Schnitt durch das Heizelement von Fig. 3 ohne Gehäuse;
- Fig. 7: die beiden Kontaktelemente des PTC-Heizwiderstands des Heizelements von Fig. 3;
- Fig. 8: das Heizelement von Fig. 3 mit Wärmeübertrager in perspektivischer Ansicht;
- Fig. 9: eine Schnittansicht zu Fig. 8;
- Fig. 10: den Wärmeübertrager von Fig. 8 in perspektivischer Ansicht; und
- Fig. 11: einen Ausschnitt eines Regelventiles mit einem weiteren Ausführungsbeispiel eines Heizelements.

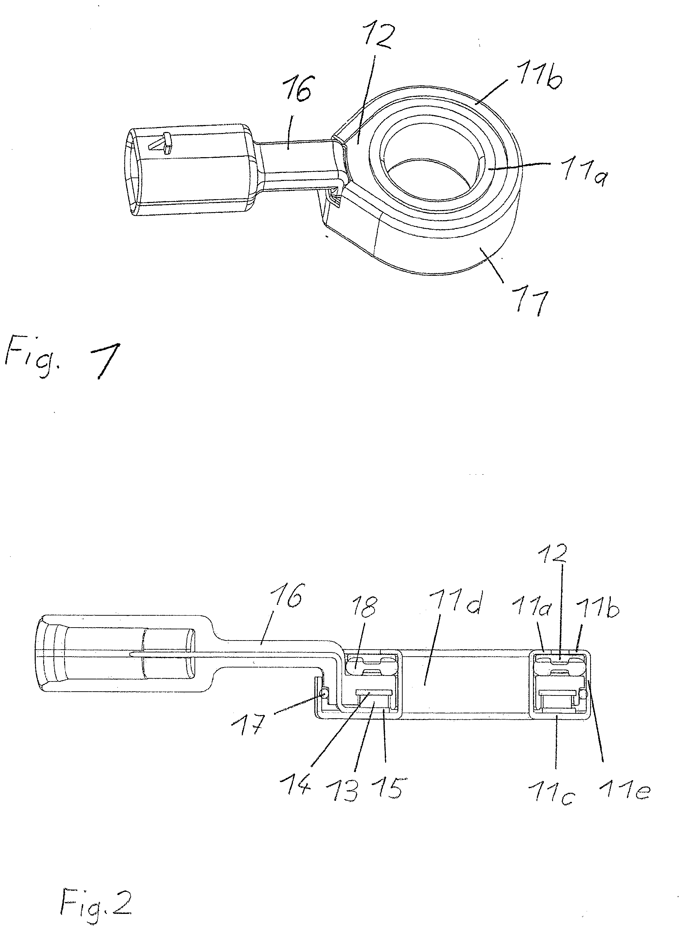

In den Figuren 1 und 2 ist ein Heizelement 7 dargestellt, das einen PTC-Heizwiderstand 13 in einem ringförmigen Gehäuse aufweist. Der PTC-Heizwiderstand kann beispielsweise ein ringförmiges Element aus einer PTC-Keramik sein oder aus mehreren ringförmig angeordneten Teilen bestehen. Das Gehäuse ist ein mehrteiliges Gehäuse aus Metall. Bei dem gezeigten Ausführungsbeispiel ist das Gehäuse aus zwei ringförmigen Metallteilen 11, 12 beispielsweise Blechteilen, gebildet. Ein erstes ringförmiges Blechteil 11 bildet eine radial innere Wand 11d, eine radial äußere Wand 11e und eine erste stirnseitige Wand 11c. Die zweite stirnseitige Wand wird von dem ersten ringförmigen Blechteil 11 und dem zweiten ringförmigen Blechteil 12 gebildet, indem ein Blechabschnitt 11a des ersten Blechteils 11, der an die radial innere Wand 11d angrenzt, und ein Blechabschnitt 11b des ersten Blechteils 11, der an die radial äußere Wand 11e angrenzt, auf dem zweiten ringförmigen Blechteil 12 liegen. Das erste Blechteil 11 kann beispielsweise aus Aluminium und das zweite Blechteil 12 aus Edelstahl sein.

Bei der Herstellung werden die Blechabschnitte 11a und 11b erst umgebogen, nachdem der PTC-Heizwiderstand 13 und weitere Komponenten des Heizelements einschließlich des Blechteils 12 in eine von dem Blechteil 11 gebildete Nut eingelegt wurden. Die Blechabschnitte 11a, 11b werden dann unter Druckbeaufschlagung umgeklappt, so dass sie gegen das Blechteil 12 drücken und so eine gute Wärmeankopplung des PTC-Heizwiderstands 13 an das Gehäuse bewirken.

Der PTC-Heizwiderstand 13 wird in dem Gehäuse von Kontaktelementen 14, 15, beispielsweise aus Blech, elektrisch kontaktiert. Die Kontaktelemente 14, 15 sind bevorzugt ringförmig und haben jeweils einen streifenförmigen Anschlussabschnitt, der aus dem Metallgehäuse herausgeführt ist und beispielsweise einen Kontaktstift eines Steckverbinders bilden kann. Die Anschlussabschnitte der Kontaktelemente 14, 15 sind mit Kunststoff 16 umspritzt, der ein Steckergehäuse bildet. Der Kunststoff 16 kann dabei zusätzlich auch einen Kunststoffrahmen bilden, der die Kontaktelemente 14, 15 und den PTC-Heizwiderstand 13 hält. Die mit Kunststoff 16 umspritzten Kontaktelemente 14, 15 und der PTC-Heizwiderstand 13 können so vormontiert werden und dann als Einheit in das Blechteil 11 des Gehäuses eingelegt werden.

Um die elektrischen Komponenten des Heizelements vor Umgebungseinflüssen zu schützen, können in dem Metallgehäuse Dichtelemente 17, 18 angeordnet sein. Bei dem gezeigten Ausführungsbeispiel drückt das Blechteil 12 gegen einen darunter liegenden Dichtring 18. Zudem ist zwischen der radial äußeren Wand 11e und dem die Anschlussabschnitte der Kontaktelemente 14, 15 umgebenden Kunststoff 16 bzw. dem daraus gebildeten Kunststoffrahmen ein Dichtring 17 angeordnet. Die Dichtringe 17, 18 können beispielsweise aus elastomerem Kunststoff sein.

Die Dichtungen 17, 18 sowie der Kunststoff bewirken eine gewisse thermische Isolation, so dass der PTC-Heizwiderstand 13 überwiegend über eine Strinseite Wärme an sein Gehäuse abgibt.

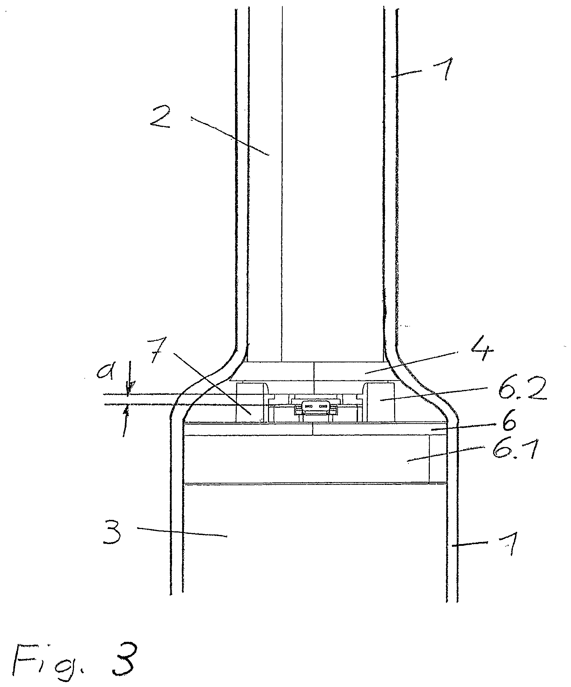

In Fig. 3 ist als Auszug der Teil einer Aktivkohlefiltereinheit dargestellt, der eine Heizeinrichtung mit einem Heizelement 7 und einem Wärmeübertrager 6 beinhaltet. Das Heizelement 7 entspricht weitgehend dem vorstehend anhand der Figuren 1 und 2 erläuterten Heizelement. Fig. 3 zeigt einen zylindrischen Absoptionskörper 2, eine sogenannte Honeycomb, und die daran anschließende Kammer 3 für eine Aktivkohleschüttung, die in den Zeichnungen wegen der Übersichtlichkeit weggelassen wurde. Tatsächlich aber ist der Wärmeübertrager 6 zumindest zum Teil in Aktivkohle eingebettet. Der Absorptionskörper 2 ist von einem äußeren Gehäuse 1, bevorzugt ein Kunststoffgehäuse, umgeben, das auch die äußere Wand der Kammer 3 für die Aktivkohleschüttung bildet. Ein Übergangsbereich passt dabei den Durchmesser der größeren Kammer 3 mit Aktivkohleschüttung in etwa dem Durchmesser des zylindrischen Absorptionskörpers 2 an. Das Heizelement 7 ist dabei in diesem Übergangsbereich angeordnet. Wie man der Zeichnung entnehmen kann, beträgt der Abstand a zwischen dem Ende des Absorptionskörpers 2 und dem Heizelement 7 nur wenige mm, bevorzugt zwischen 2 mm und 10 mm. Dadurch kann die Temperatur der Aktivkohle und des Gasstromes in diesem Bereich sehr wirksam erhöht werden. Das Heizelement 7 ist weiterhin wärmeleitend mit einem Wärmeübertrager 6 verbunden, der in dieser beispielhaften Ausgestaltung einen äußeren zylindrischen Ring 6.1 aufweist, der an der Kammerwand bzw. innen am Kunststoffgehäuse 1 anliegt. Zum einen ist der Wärmeübertrager 6 dadurch in der Kammer fixiert, zum anderen ist gewährleistet, dass dadurch der gesamte den Absorptionskörper 2 durchströmende Gasstrom auch den Wärmeübertrager 6 durchströmt und sich dabei erwärmt. Zusätzlich wird die Aktivkohleschüttung gezielt in diesem Bereich durch die wärmeleitende Verbindung zum Wärmeübertrager 6 erwärmt.

Der Wärmeübertrager weist weiterhin mehrere Stege 6.2 auf, die das Heizelement 7 überragen und den Absorptionskörper 2 an diesem Ende in seiner Lage fixieren. Weiterhin bilden die Stege 6.2 eine wärmeleitende Verbindung zum Absorptionskörper. Dadurch erwärmt sich zusätzlich der gesamte Absorptionskörper 2, was seine Effektivität wesentlich erhöht. In dieser Ausgestaltung erfolgt zusätzlich noch die Fixierung einer Dichtung 4, die den Absorptionskörper 2 zwischen seiner Außenseite und dem Kunststoffgehäuse 1 abdichtet. Dadurch werden andere Bauteile, die diese Funktionen gewährleisten sollen, eingespart beziehungsweise ersetzt, wodurch die Heizeinrichtung keinen zusätzlichen Bauraum benötigt und die Anzahl der Einzelteile nicht erhöht werden muss.

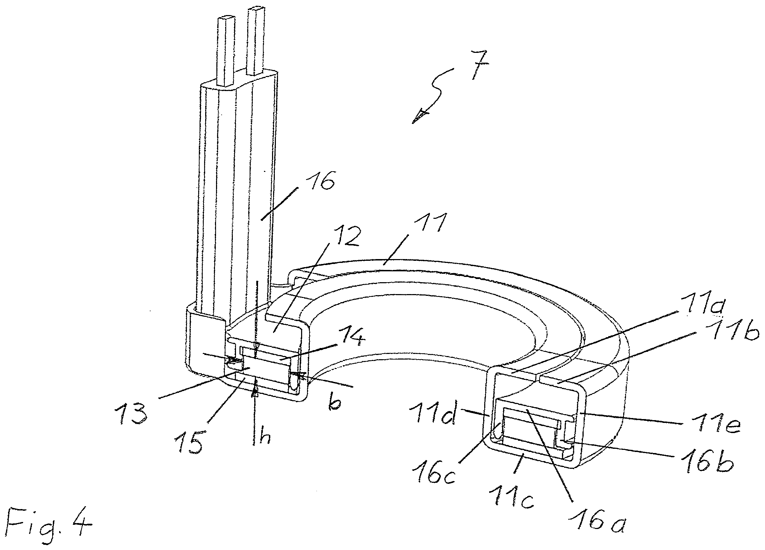

In Fig. 4 ist das Heizelement 7 im Schnitt gezeigt. Aus Übersichtsgründen sind hierbei die beiden eigentlich vorhandenen umlaufenden Dichtungen 16, 17 weggelassen. Das Heizelement 7 weist ein zweiteiliges Metallgehäuse aus ringförmigen Blechteilen 11 und 12 auf, wobei der im Schnitt U-förmige untere Gehäuseteil 11 die untere Stirnseite 11c und die beiden radial aufstehenden Seitenwände 11d, 11e bildet. Der obere Teil 12 ist flach ausgeführt. Die oberen Enden 11a, 11b der Seitenwände 11d, 11e sind über dem oberen Gehäuseteil 12 aufeinander zu umgebogen, bevorzugt eingerollt. Dadurch ist ein, bis auf den Bereich zum Herausführen der elektrischen Anschlüsse 14b, 15b, rundum geschlossenes Gehäuse gegeben. Im Inneren des zweiteiligen Gehäuses 11, 12 ist ein ringförmiger PTC-Baustein 13 angeordnet. Seine Höhe h ist geringer als seine Ringbreite b als Differenz zwischen äußerem und innerem Radius. An seinen Stirnseiten ist er jeweils von einem Kontaktelement 14, 15 elektrisch kontaktiert.

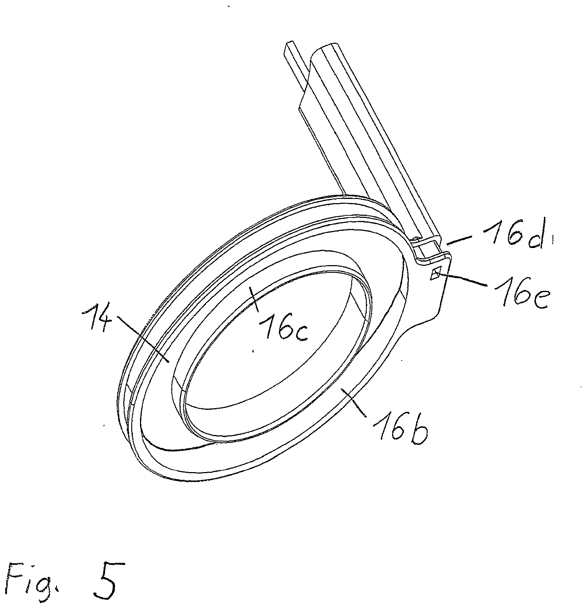

Das obere Kontaktelement 14 ist in einen Kunststoffrahmen 16 eingespritzt. Dies ist in Fig. 5 nochmals perspektivisch dargestellt, die Kunststoffrahmen 16 mit dem oberen Kontaktelement 14 zeigt. Das untere Kontaktelement 15, das eigentlich an der Stelle 16e aus dem Kunststoffrahmen 16 herausragt, ist der Übersicht wegen weggelassen. Der Kunststoffrahmen 16 ist so ausgeführt, dass ein ringförmiger Bereich 16a die Oberseite des Kontaktelementes 14a bedeckt und sich davon ausgehend zwei zylindrische Seitenwände 16b und 16c erstrecken, zwischen denen der ringförmige PTC-Baustein 13 in Kontakt mit dem Abschnitt 14a des Kontaktelementes 14 eingelegt ist.

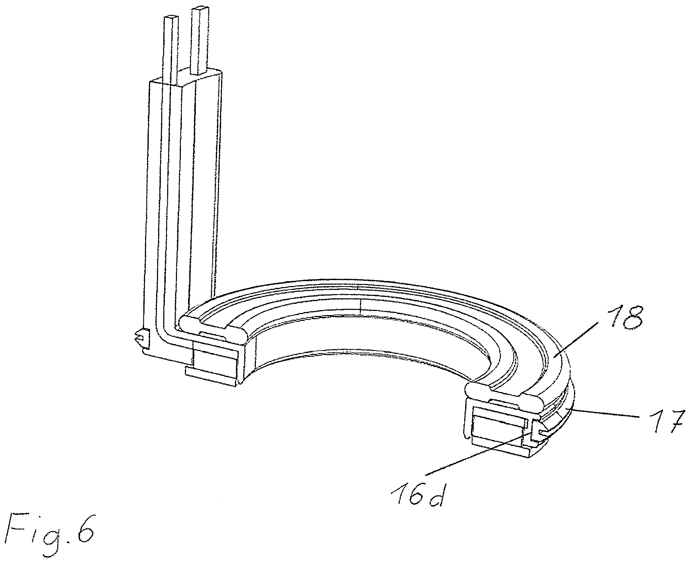

Dies ist besonders in Fig. 6 zu erkennen, wobei Fig. 6 das Heizelement 7 nun ohne Metallgehäuse darstellt. Der Kunststoffrahmen16 weist am Außenumfang eine Ringnut 16d auf. In diese Ringnut 16d ist eine Dichtung 17 überstehend eingebracht. Im vorliegenden Beispiel ist die Dichtung 17 als zweilippige Formdichtung ausgeführt. Auf der Oberseite des ringförmigen Bereiches 16a ist eine weitere Dichtung 18 angeordnet. Im ausgeführten Beispiel ist es eine ringförmige Formdichtung mit keulenartig verdickten Randbereichen. Beide Dichtungen 17, 18 sind elastisch zwischen dem Kunststoffrahmen 16 und dem zweiteiligen Metallgehäuse 11, 12 druckverformt und dichten somit den PTC-Baustein 13 gegen Einflüsse von außen zuverlässig ab.

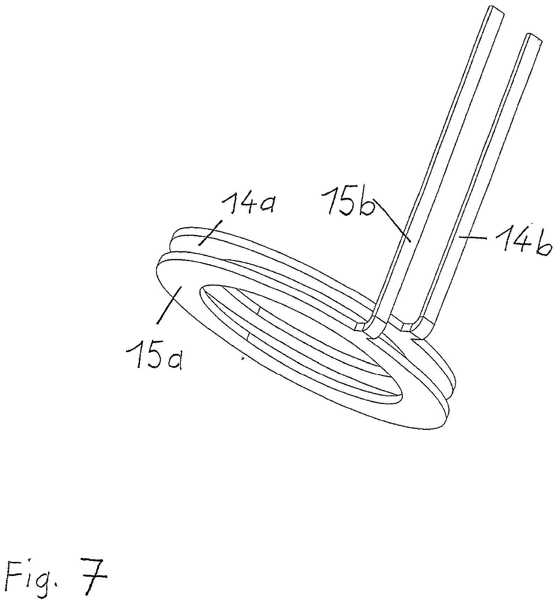

In Fig. 7 sind die beiden Kontaktelemente 14, 15 nochmals separat dargestellt. Sie bestehen jeweils aus einem ringförmigen Bereich 14a und 15a, der in elektrischem Kontakt mit jeweils einer Stirnseite des PTC-Bausteines 13 steht, und aus einem streifenförmigen Bereich 14b, 15b zur elektrischen Kontaktierung des Heizelementes nach außen. Beide streifenförmigen Bereiche 14b, 15b sind in den Kunststoffrahmen 16 dicht eingespritzt, sodass nur die Anschlussbereiche frei liegen. Der ringförmige Abschnitt 15a dagegen liegt frei an der Unterseite des PTC-Bausteines an.

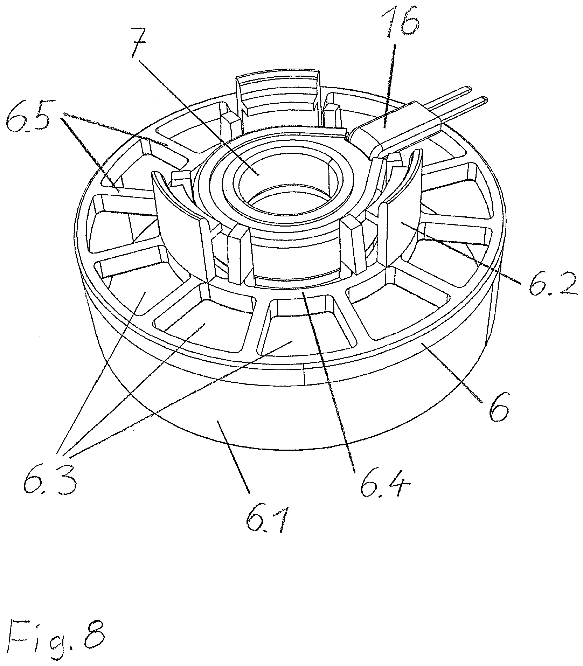

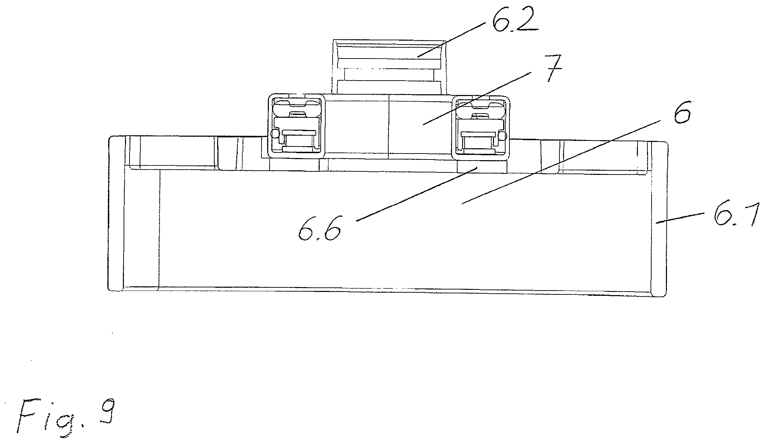

Fig. 8 und 9 zeigen die Heizeinrichtung aus Heizelement 7 und Wärmeübertrager 6. Die Figuren beziehen sich dabei auf ein Heizelement 7, das lediglich wärmeleitend mit dem Wärmeübertrager 6 verbunden ist. In einer anderen Ausgestaltungsvariante können Heizelement 7 und Wärmeübertrager 6 jedoch auch einstückig ausgeführt sein.

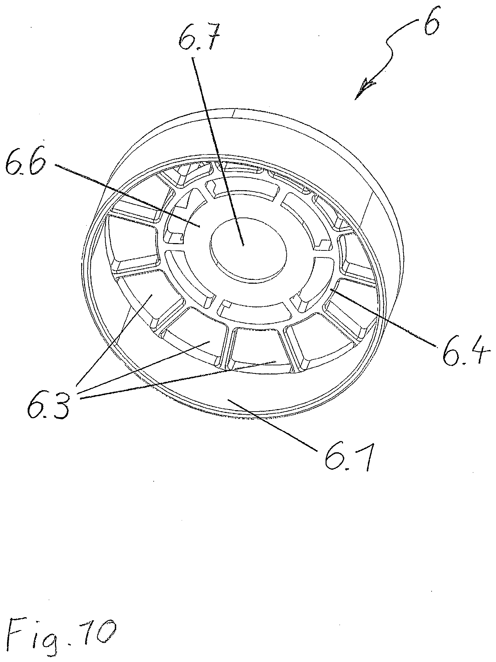

Der Wärmeübertrager 6 ist zudem in Fig. 10 dargestellt. Für eine wärmeleitenden Verbindung gemäß den Fig. 8 und 9 weist der Wärmeübertrager 6 einen Verbindungsring 6.6 auf, der flächig mit der Gehäuseunterseite 11c des Heizelementes 7 verbunden ist. Im Ausführungsbeispiel hat dabei der Verbindungsring 6.6 in etwa die gleiche radiale Dimension wie die Gehäuseunterseite 11c, sodass eine maximale Wärmeübertragungsfläche ohne zusätzliche Behinderung des Gasstromes erreicht ist.

Weiterhin ist ein Zwischenring 6.4 ausgebildet, der in axialer Verlängerung in Richtung Absorptionskörper 2 Stege 6.2 ausbildet, die den Absorptionskörper 2 und eine Dichtung 4 für den Absorptionskörper 2 fixieren. Da nur einzelne Stege und kein massiver Ring ausgebildet ist, ist ein Ein- und Ausströmen des Gasstromes in den Absorptionskörper 2 nicht behindert.

Die radiale Außenseite des Wärmeübertragers 6 ist ebenfalls von einem äußeren Ring 6.1 gebildet, der in der beispielhaften Ausgestaltung nach Fig. 3 an der Innenseite des Kunststoffgehäuses 1 anliegt. Zwischen den einzelnen Ringen 6.6, 6.4, 6.1 sind Verbindungsstege 6.5 vorhanden. Die Durchbrüche 6.3 zwischen den Verbindungsstegen 6.5 und der zentrale Durchbruch 6.7 ermöglichen ein Durchströmen des gesamten Wärmeübertragers. Gleichzeitig stützen die Verbindungsstege 6.5 ein vorhandenes Trennvlies (nicht gezeigt) ab.

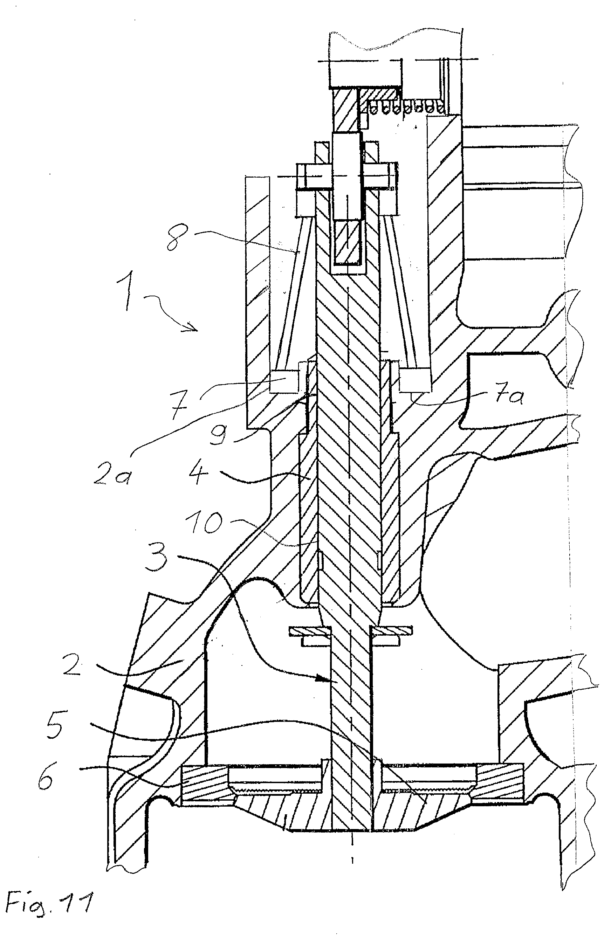

Fig. 11 zeigt einen Ausschnitt eines Regelventils 1 mit einem Ventilgehäuse 2, der Ventilstange 3, der wärmeleitend mit dem Ventilgehäuse 2 verbundenen Ventilstangenführung 4, dem Ventilteller 5 und dem Ventilsitz 6. Die Ventilstange 3 ist dabei beweglich in einem Führungskanal 10 gehalten, wobei zwischen dem Führungskanal 10 und der Ventilstange 3 ein kleiner Ringspalt 9 gegeben ist. In einer Ringnut 2a des Ventilgehäuses 2, die rings um die Ventilstange 3 gelagert ist, ist ein weiteres Ausführungsbeispiel eines Heizelements 7 angeordnet, die im Wesentlichen mit den vorstehend beschriebenen Ausführungsbeispielen übereinstimmt.

Das ringförmige Gehäuse des Heizelements 7 wird mit seiner unteren Stirnseite 7a durch ein Federelement 8 gegen den Boden der Ringnut 2a gedrückt. Dabei erfolgt die Wärmeübertragung vom Heizelement 7 auf das Ventilgehäuse 2 überwiegend über diese untere Stirnseite 7a. Die Beheizung des Ringspaltes 9 und damit des darin befindlichen eingefrorenen Fluides oder Kondensates erfolgt über die wärmeleitend mit dem Ventilgehäuse 2 verbundene Ventilstangenführung 4, die wenigstens teilweise den Führungskanal 10 ausbildet und selbst auch gut wärmeleitend ist. In einer alternativen Ausbildung können das Ventilgehäuse 2 und die Ventilstangenführung 4 auch einstückig ausgeführt sein. Ebenso kann das Heizelement 7 auch direkt an der Ventilstangenführung 4 wärmeleitend angebracht sein.

## Patentansprüche

1. Heizelement mit
einem ringförmigen Gehäuse, in dem ein PTC-Heizwiderstand (13) und ein Kontaktelement (14, 15), das den PTC-Heizwiderstand (13) kontaktiert, angeordnet sind,
wobei das Gehäuse ein ringförmiges Metallteil (11) aufweist, das eine radial innere Wand (11d), eine radial äußere Wand (11e) und eine erste stirnseitige Wand (11c) bildet, **dadurch gekennzeichnet, dass**
sowohl an die radial innere Wand (11d) als auch an die radial äußere Wand (11e) jeweils ein Abschnitt (11a, 11b) angrenzt, der zumindest einen Teil einer zweiten stirnseitigen Wand des Gehäuses, die der ersten stirnseitigen Wand (11c) gegenüberliegt, bildet und nach dem Einlegen des PTC-Heizwiderstands (13) und des Kontaktelements (14, 15) umgeklappt wurde.

2. Heizelement nach Anspruch 1 **dadurch gekennzeichnet, dass** das Gehäuse ein zweites Gehäuseteil (12) aufweist, das zusammen mit den beiden Abschnitten (11a, 11b) des ringförmigen Metallteils (11) die zweite stirnseitige Wand bildet.

3. Heizelement nach Anspruch 2, **dadurch gekennzeichnet, dass** der an die radial innere Seitenwand (11d) angrenzende Abschnitt (11a) und der an die radial äußere Seitenwand (11e) angrenzenden Abschnitt (11e) jeweils einen Teil des zweiten Gehäuseteils (12) bedecken und ein Bereich des zweiten Gehäuseteils (12) zwischen dem an die radial innere Seitenwand (11d) und dem an die radial äußere Seitenwand (11e) angrenzenden Abschnitt (11a, 11b) von diesen beiden Abschnitten (11, 11b) unbedeckt ist.

4. Heizelement nach einem der vorstehenden Ansprüche, **dadurch gekennzeichnet, dass** zur Abdichtung des Gehäuses unter der zweiten stirnseitigen Wand ein Dichtring (18) angeordnet ist.

5. Heizelement nach einem der vorstehenden Ansprüche, **dadurch gekennzeichnet, dass** das PTC-Heizelement (13) und das Kontaktelement (14, 15) von einem Kunststoffrahmen in dem Gehäuse gehalten werden.

6. Heizelement nach einem der vorstehenden Ansprüche, **dadurch gekennzeichnet, dass** von dem Kontaktelement (14, 15) ein Anschlussstreifen ausgeht, der durch eine Aussparung des ringförmigen Blechteils (11) hindurch ragt.

7. Heizelement nach Anspruch 6, **dadurch gekennzeichnet, dass** der Anschlussstreifen mit Kunststoff (16) umspritzt ist.

8. Heizelement nach Anspruch 5 und 7, **dadurch gekennzeichnet, dass** die Umspritzung des Anschlussstreifens den Kunststoffrahmen und ein Steckergehäuse bildet.

9. Heizelement nach Anspruch 8, **dadurch gekennzeichnet, dass** das
Kontaktelement (14) in den Kunststoffrahmen (16) eingespritzt ist.

10. Heizelement nach einem der Ansprüche 6 bis 8, **dadurch gekennzeichnet, dass** zwischen der radial äußeren Wand (11e) und dem Kunststoffrahmen (16) ein Dichtring (17) angeordnet ist.

11. Heizelement nach einem der vorstehenden Ansprüche, **dadurch gekennzeichnet, dass** an gegenüberliegenden Stirnseiten des PTC-Heizelement (13) jeweils ein Kontaktelement (14, 15) anliegt.

12. Heizelement nach einem der vorstehenden Ansprüche, **dadurch gekennzeichnet, dass** der PTC-Heizwiderstand (13) einen Ring definiert, dessen Höhe (h) geringer als seine Ringbreite (b) als Differenz zwischen seinem äußeren und seinem inneren Radius ist und der PTC-Heizwiderstand (13) Wärme überwiegend an die Stirnseite (11c) abgibt.

13. Heizeinrichtung mit einem Heizelement (7) nach einem der vorstehenden Ansprüche und einem an dem Heizelement angebrachten Wärmeübertrager (6).

14. Verwendung eines Heizelements nach einem der Ansprüche 1 bis 12 zur Beheizung eines Regelventils, insbesondere eines Abgasrückführventils.

15. Verwendung eines Heizelements nach einem der Ansprüche 1 bis 12 zur Beheizung eines Aktivkohlefilters.

## Claims

1. A heating element comprising
an annular housing in which a PTC heating resistor (13) and a contact element (14, 15) contacting the PTC heating resistor (13) are disposed,
wherein the housing comprises an annular metal part (11) forming a radially inner wall (11d), a radially outer wall (11e) and a first end wall (11c), **characterized in that**
both the radially inner wall (11d) and the radially outer wall (11e) are each adjoined by a portion (11a, 11b) which forms at least part of a second end wall of the housing opposite the first end wall (11c) and which has been folded down after insertion of the PTC heating resistor (13) and the contact element (14, 15).

2. A heating element according to claim 1, **characterized in that** the housing has a second housing part (12) which, together with the two portions (11a, 11b) of the annular metal part (11), forms the second end wall.

3. A heating element according to claim 2, **characterized in that** the portion (11a) adjacent to the radially inner side wall (11e) and the portion (11e) adjacent to the radially outer side wall (11e) each cover a part of the second housing part (12), and an area of the second housing part (12) between the portion (11a, 11b) adjacent to the radially inner side wall (11d) and the portion (11b) adjacent to the radially outer side wall (11e) is uncovered by these two portions (11, 11b).

4. A heating element according to any one of the preceding claims, **characterized in that** a sealing ring (18) is arranged under the second end wall for sealing the housing.

5. A Heating element according to any one of the preceding claims, **characterized in that** the PTC heating resistor (13) and the contact element (14, 15) are held in the housing by a plastic frame.

6. A heating element according to any one of the preceding claims, **characterized in that** a connecting strip extends from the contact element (14, 15) and projects through a recess in the annular sheet-metal part (11).

7. A heating element according to claim 6, **characterized in that** the connection strip is overmoulded with plastic (16).

8. A heating element according to claim 5 and 7, **characterized in that** the overmoulding of the connection strip forms the plastic frame and a connector housing.

9. A heating element according to claim 8, **characterized in that** the contact element (14) is overmoulded in the plastic frame (16).

10. A heating element according to any one of the claims 6 to 8, **characterized in that** a sealing ring (17) is arranged between the radially outer wall (11e) and the plastic frame (16).

11. A heating element according to any one of the preceding claims, **characterized in that** a contact element (14, 15) rests against each of opposite end faces of the PTC heating resistor (13).

12. A heating element according to any one of the preceding claims, **characterized in that** the PTC heating resistor (13) defines a ring whose height (h) is smaller than its ring width (b) as the difference between its outer and its inner radius, and the PTC heating resistor (13) emits heat predominantly to the end face wall (11c).

13. A heating device comprising a heating element (7) according to any one of the preceding claims and a heat exchanger (6) mounted on the heating element.

14. A use of a heating element according to any one of claims 1 to 12 for heating a control valve, in particular an exhaust gas recirculation valve.

15. A use of a heating element according to any one of claims 1 to 12 for heating an activated carbon filter.

## Revendications

1. Elément chauffant avec
un boîtier annulaire dans lequel sont disposés une résistance chauffante CTP (13) et un élément de contact (14, 15) en contact avec la résistance chauffante CTP (13),
dans lequel le boîtier comprend une pièce métallique annulaire (11) formant une paroi radiale intérieure (11d), une paroi radiale extérieure (11e) et une première paroi frontale (11c), **caractérisée par le fait que**
la paroi radialement intérieure (11d) et la paroi radialement extérieure (11e) sont toutes deux reliées par une section (11a, 11b) qui forme au moins une partie d'une seconde paroi frontale du boîtier opposée à la première paroi frontale (11c) et qui a été rabattue après l'insertion de la résistance chauffante CTP (13) et de l'élément de contact (14, 15).

2. Elément chauffant selon la revendication 1, **caractérisé par le fait que** le boîtier comporte une seconde partie de boîtier (12) qui, avec les deux sections (11a, 11b) de la pièce métallique annulaire (11), forme la seconde paroi frontale.

3. Elément chauffant selon la revendication 2, **caractérisé en ce que** la section (11a) adjacente à la paroi latérale radialement intérieure (11d) et la section (11e) adjacente à la paroi latérale radialement extérieure (11e) couvrent chacune une partie de la seconde partie de boîtier (12), et une zone de la seconde partie de boîtier (12) entre la section (11a) adjacente à la paroi latérale radialement intérieure (11d) et la section (11b) adjacente à la paroi latérale radialement extérieure (11e) est découverte par ces deux sections (11, 11b).

4. Elément chauffant selon l'une des revendications précédentes, **caractérisé en ce qu'**une bague d'étanchéité (18) est disposé sous la seconde paroi frontale pour assurer l'étanchéité du boîtier.

5. Elément chauffant selon l'une des revendications précédentes, **caractérisé par le fait que** la résistance chauffante CTP (13) et l'élément de contact (14, 15 sont maintenus dans le boîtier par un cadre en plastique.

6. Elément chauffant selon l'une des revendications précédentes, **caractérisé par le fait qu'**une bande de connexion s'étend de l'élément de contact (14, 15) et fait saillie à travers un renfoncement dans la pièce annulaire en tôle (11).

7. Elément chauffant selon la revendication 6, **caractérisé par le fait que** la bande de connexion est surmoulée de plastique (16).

8. Elément chauffant selon les revendications 5 et 7, **caractérisé par le fait que** le surmoulage de la bande de connexion forme le cadre en plastique et un boîtier de connecteur.

9. Elément chauffant selon la revendication 8, **caractérisé par le fait que** l'élément de contact (14) est moulé par injection dans le cadre en plastique (16).

10. Elément chauffant selon l'une des revendications 6 à 8, **caractérisé par le fait qu'**une bague d'étanchéité (17) est disposée entre la paroi radialement extérieure (11e) et le cadre en plastique (16).

11. Elément chauffant selon l'une des revendications précédentes, **caractérisé par le fait qu'**un élément de contact (14, 15) repose dans chaque cas sur les faces opposées de la résistance chauffante CTP (13).

12. Elément chauffant selon l'une des revendications précédentes, **caractérisé en ce que** la résistance chauffante PTC (13) définit un anneau dont la hauteur (h) est inférieure à la largeur (b) de l'anneau en tant que différence entre son rayon extérieur et son rayon intérieur, et la résistance chauffante PTC (13) émet de la chaleur principalement vers la paroi frontale (11c).

13. Dispositif de chauffage comprenant un élément chauffant (7) selon l'une des revendications précédentes et un échangeur de chaleur (6) monté sur l'élément chauffant.

14. Utilisation d'un élément chauffant selon l'une des revendications 1 à 12 pour chauffer une vanne de commande, en particulier une vanne de recirculation des gaz d'échappement.

15. Utilisation d'un élément chauffant selon l'une des revendications 1 à 12 pour chauffer un filtre à charbon actif.
